# EUROPEAN PATENT SPECIFICATION

(11) **EP 3 792 774 B1**
(45) Date of publication and mention of the grant of the patent: **13.03.2024**
(21) Application number: 20201549.1
(22) Date of filing: 09.07.2012
(51) Int. Cl.: G06F 13/00, A63F 13/533, A63F 13/358, A63F 13/355, A63F 13/88, A63F 13/48

(54) **INFORMATION PROCESSING SYSTEM**
INFORMATIONSVERARBEITUNGSSYSTEM
SYSTÈME DE TRAITEMENT D'INFORMATIONS

(30) Priority: 21.11.2011 JP 2011253711
(43) Date of publication of application: 17.03.2021
(62) Divisional of application: 12850988.2
(73) Proprietor: Sony Interactive Entertainment Inc., Tokyo 108-0075 (JP)
(72) Inventor: IKENAGA, Toshiya, Minato-ku, Tokyo 108-0075 (JP); CHATANI, Masayuki, Minato-ku, Tokyo 108-0075 (JP)
(74) Representative: D Young & Co LLP

(56) References cited:
- JP-A- 2008 263 559
- US-A1- 2008 045 338
- US-A1- 2008 102 960

## Description

### [Technical Field]

The present invention relates to an information processing system, an information processing terminal, an information processing method, an information processing program, and a computer-readable recording medium that stores the information processing program.

### [Background Art]

There exist what are known as online games that can be played online when servers and clients are connected via a network.

Previously proposed arrangements are disclosed in JP 2008 263559 A.

### [Summary]

### [Technical Problem]

However, in situations like the one mentioned above, there can be various network states between the client and the server as well as diverse terminal types involved. For example, if there are significant network delays while the game being played emphasizes timing, it may be difficult to play the game in question. In such a case, the user will find it convenient if there is displayed a selection screen or the like that allows games to be selected depending on the impact on each of the games resulting from the states of the network in use.

The present invention is defined by the appended set of claims. It has been made in view of the above circumstances and provides an information processing system according to claim 1, an information processing method according to claim 10, a computer program product according to claim 11, and a computer-readable recording medium according to claim 12, whereby the content of games is displayed in accordance with the impact on each of the games resulting from network states (e.g., network delays). The dependent claims define preferred embodiments.

### [Brief Description of Drawings]

[FIG. 1]

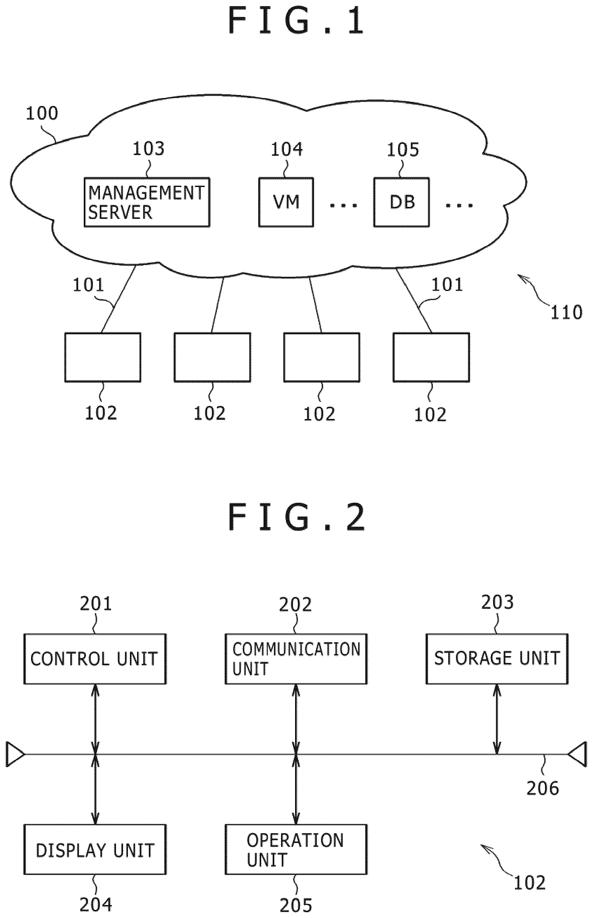

   FIG. 1 is a diagram for explaining a typical information processing system embodying the present invention.
[FIG. 2]
   FIG. 2 is a diagram for explaining the structure of a terminal indicated in FIG. 1.
[FIG. 3]

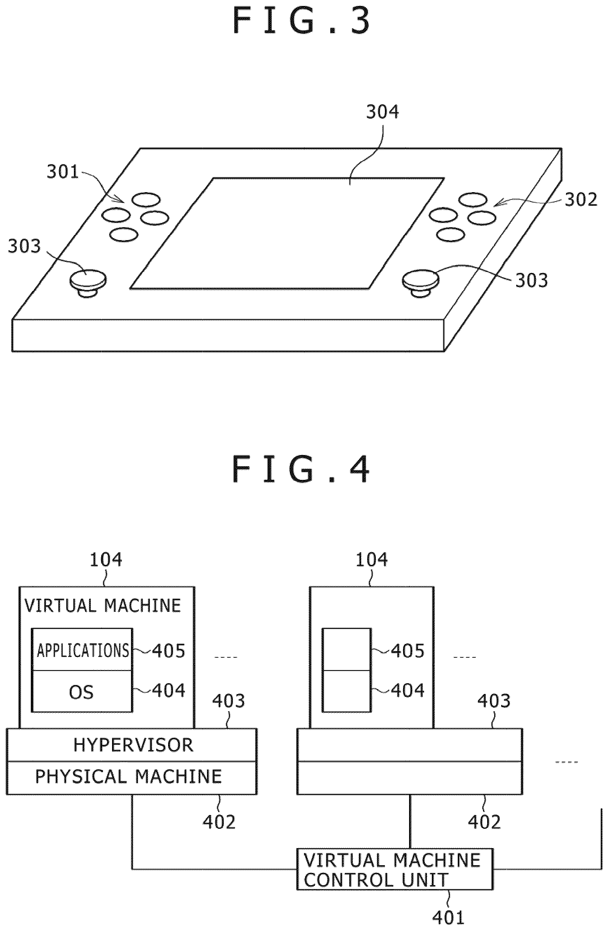

   FIG. 3 is an illustration showing a typical appearance of the terminal indicated in FIG. 1.
[FIG. 4]
   FIG. 4 is a diagram for explaining a virtual machine indicated in FIG. 1.
[FIG. 5]

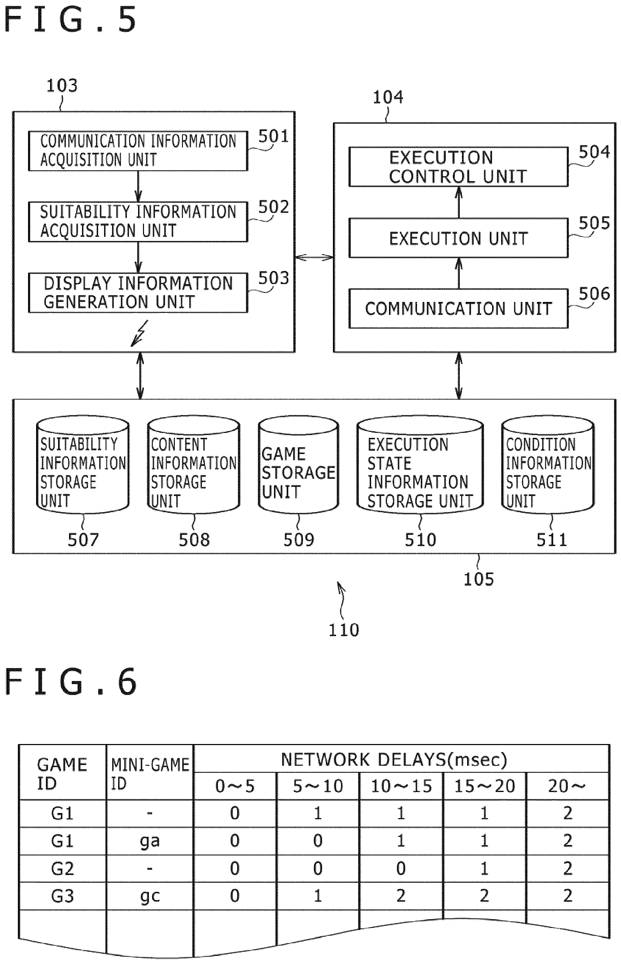

   FIG. 5 is a diagram showing a typical functional structure of the information processing system indicated in FIG. 1.
[FIG. 6]
   FIG. 6 is a diagram showing typical information to be stored in a suitability information storage unit indicated in FIG. 5.
[FIG. 7]

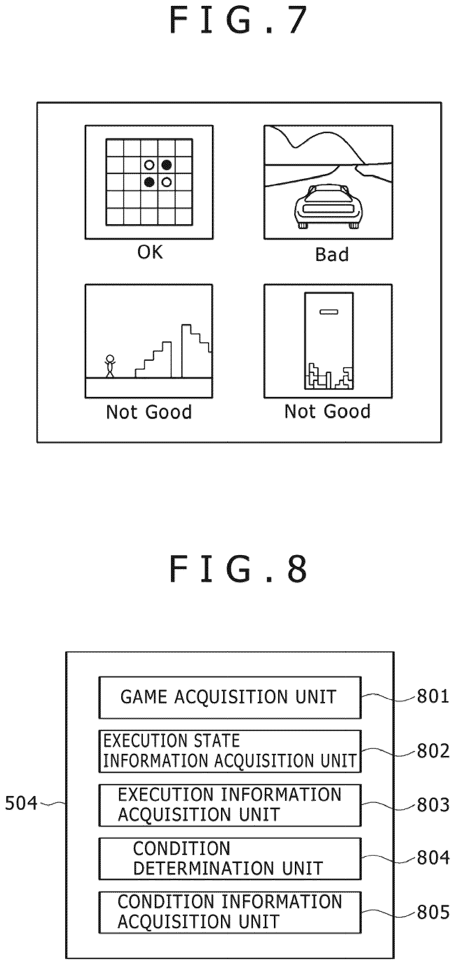

   FIG. 7 is an illustration showing typical display information generated by a display information generation unit indicated in FIG. 5.
[FIG. 8]
   FIG. 8 is a diagram showing a typical functional structure of an execution control unit indicated in FIG. 5.
[FIG. 9]

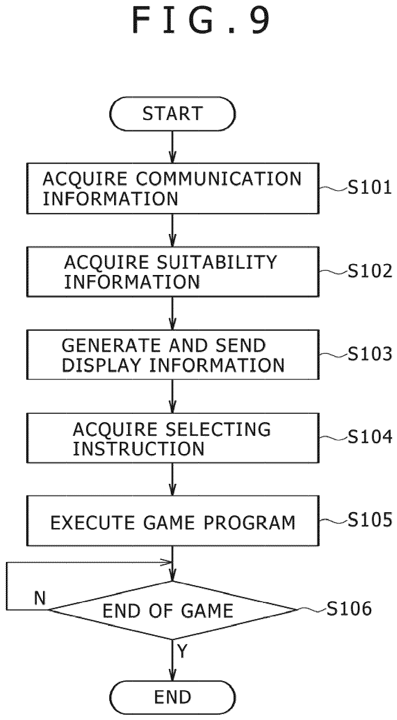

   FIG. 9 is a diagram showing a typical flow of processing performed by the information processing system embodying the present invention.

### [Description of Embodiments]

Some embodiments of the present invention are explained below in reference to the accompanying drawings. Throughout the drawings, like or corresponding elements are designated by the same reference symbols, and their explanations are omitted where redundant.

FIG. 1 is a diagram for explaining a typical information processing system embodying the present invention. As depicted in FIG. 1, an information processing system 110 of this embodiment includes a cloud computing base 100 and one or multiple terminals 102. The cloud computing base 100 and the terminal 102 are connected via a network 101.

The cloud computing base 100 includes a management server 103, one or multiple virtual machines (VM's) 104 (to be discussed later), and one or multiple databases (DB's) 105. In this context, the cloud computing base 100 refers to a so-called network-based computing platform that permits the use of computers based on the network 101. As such, the cloud computing base 100 is a basis on which users utilize computer processing as services via the network.

As shown in FIG. 2, the terminal 102 includes a control unit 201, a communication unit 202, a storage unit 203, a display unit 204, and an operation unit 205. The units 201 through 205 are connected via a bus 206. The control unit 201 may typically be a CPU or an MPU that operates in accordance with programs stored in the storage unit 203. The storage unit 203 may be composed, for example, of an information recording medium such as a hard disk, a ROM, or a RAM that holds the programs to be executed by the control unit 201. The storage unit 203 also serves as a work memory for the control unit 201. The programs to be processed by the above-mentioned control unit 201 may be offered downloaded via the network 101 or provided by means of diverse kinds of computer-readable information recording medium such as CD-ROM's or DVD-ROM's.

The operation unit 205 is made up of an interface such as a keyboard, a mouse, a computer, buttons, etc., for example. In response to a user's instructing operation, the operation unit 205 outputs the content of the instruction in question to the control unit 201. The display unit 204 may be a liquid crystal display, a CRT display, or an organic EL display, for example. Under the instructions of the control unit 201, the display unit 204 displays information.

The above-described structure of the terminal 102 is only an example and is not limitative of the present invention. Specifically, the terminal may further include a TV set, a smartphone, a tablet computer, and a personal computer. The operation unit 205 may further include a game pad, a TV remote controller, and a touch panel. Since the database 105 and management server 103 are each structured to include a control unit 201, a communication unit 202, and a storage unit 203 such as those described above, these units will not be discussed further.

FIG. 3 is an illustration showing a typical appearance of the terminal. For example, the terminal 102 has arrow keys 301, multiple buttons 302, and analog operation units 303 constituting the operation unit 205, as shown in FIG. 3. The terminal 102 also has a display screen 304 as the display unit 204.

The arrow keys 301 may typically include an up arrow key, a down arrow key, a right arrow key, and a left arrow key. The user may operate the arrow keys 301 to move a target object up and down and left and right on the screen. The multiple buttons 302 may be identified by marks such as "a," "b," "c," and "d." The user can push these buttons 302 to perform the processes assigned to each of the buttons by the application being executed. The multiple buttons 302 may each be a so-called analog button that can execute a process in a manner reflecting the strength with which the button in question is pressed and the distance.

The analog operation units 303 can each be tilted in operation from a predetermined reference position, for example. The user enters input information reflecting the amount and the direction of tilt relative to the reference position of the analog operation units 303. For example, using the analog operation units 303, the user can incline the target object on the display screen 304 in the desired direction and in the desired amount reflecting the input amount and direction of tilt. The display screen 304 is equivalent to the display screen 304 of the display unit 204 and may display images corresponding to the application, for example.

Incidentally, the appearance of the terminal 102 and the structures of the operation unit 205 and display unit 204 are only examples and are not limitative of the present invention. Alternatively, the operation unit 205 may be composed of a touch panel displayed on the display unit 204, for example. As another example, the display unit 204 may be the display screen of a monitor or the like formed by a CRT or a liquid crystal display device. Furthermore, the arrow keys 301, multiple buttons 302, and analog operation units 303 may come in a wide variety of numbers and configurations. The terminal 102 may further possess a start button, a select button (not shown), other buttons as well as an acceleration sensor or the like.

FIG. 4 is a diagram for explaining a virtual machine indicated in FIG. 1. As shown in FIG. 4, the cloud computing base 100 includes a virtual machine control unit 401 and a group of physical machines 402 connected to the virtual machine control unit 401.

As depicted in FIG. 4, hypervisor 403 is provided on each physical machine 402. One or multiple virtual machines (VM's) 104 are started up on the hypervisor 403. The hypervisor 403 refers to software that allows the virtual machines 104 to be started up and controlled on each physical machine 402 without recourse to a general-purpose OS. As is well known, the virtual machine 104 is a virtually formed set of a CPU and a memory. Needless to say, each physical machine 402 is a computer composed of the CPU, memory, etc.

Each virtual machine 104 has an OS 404 and applications 405. The program to be processed by a virtual machine 104 corresponds to one of the applications 405. The virtual machine control unit 401 generates one or multiple virtual machines 104 on the physical machine 402. Specifically, a virtual machine 104 is generated by allocating the resources of the physical machine 402 (e.g. resources such as CPU processing time and memory capacity) to that virtual machine 104 and by suitably controlling the allocated resources via the hypervisor 403.

That is, programs are installed in and executed by the virtual machines 104 (to be discussed below) actually on the physical machine 402. For example, the storage unit composed of the memory or the like in the physical machine 402 stores multiple programs including the program of this embodiment. The program of this embodiment is in fact executed by one or multiple CPU's of the physical machines 402. In this case, one or multiple CPU's of the physical machines 402 are also used by the above-mentioned multiple programs. For example, the processing time of one or multiple CPU's may be divided and part of the divided processing time segments may be allocated for execution of the program of this embodiment. It should be noted that the above-described structures of the virtual machines 104 and other components are only examples and are not limitative of the present invention.

FIG. 5 is a diagram showing a typical functional structure of the information processing system of this embodiment. Although only one virtual machine 104 is shown in FIG. 5 for simplification of explanation, the information processing system 110 may include a number of virtual machines 104 corresponding to the number of the terminals 102 connected, for example. Also in FIG. 5, the terminal 102 to be connected to the communication unit 506 is omitted for simplification of illustration.

As shown in FIG. 5, the management server 103 includes a communication information acquisition unit 501, a suitability information acquisition unit 502, and a display information generation unit 503. The communication information acquisition unit 501 acquires communication information representing the communication states between a given terminal 102 on the one hand and the communication unit 506 of the virtual machine 104 communicating with that terminal 102 on the other hand. Specifically, the communication information acquisition unit 501 may acquire information representing delays on the network (latency) connecting a given terminal 102 with the communication unit 506 communicating with that terminal 102, from that communication unit 506, for example. Whereas only one terminal 102 was assumed in the foregoing description, if multiple terminals 102 are connected, the communication information acquisition unit 501 may acquire information representing the delays on the network over which each of these terminals 102 communicates. Although this embodiment is explained using the case in which the communication information represents network delays, the information communication information may also include packet loss rate, network bandwidth, round-trip time, network congestion state, and information about jitter representative of the amount of changes in diverse parameters over a predetermined time period in addition to the network delays.

Based on the communication information acquired by the communication information acquisition unit 501, the suitability information acquisition unit 502 references the suitability information storage unit 507 (to be discussed later) to acquire the extent of influence of the above-mentioned network communication states on the application to be executed, i.e., the degree of suitability of executing the application in question.

Here, the suitability information storage unit 507 stores suitability information representing the suitability of executing each of various game programs in relation to game identification information identifying these game programs and to the scope of the above-mentioned communication information. Specifically, as shown in FIG. 6, the suitability information storage unit 507 may store suitability information representing the suitability of executing the game program identified by each game ID in relation to game ID's and to the range of network delays, for example. In this context, the range of network delays may include multiple stages such as 0 to 5, 5 to 10, 10 to 15, 15 to 20, and 20 or longer (msec), as shown in FIG. 6 for example. Also, the suitability information may denote the suitability of executing the game program identified by each game ID using multiple stages such as 0, 1, and 2. For example, if the suitability information is 0, that means there is no problem with executing the game in question (good); if the suitability information is 1, that means there are few adverse effects on the overall progress of the game in question except for some timing mismatches (acceptable); if the suitability information is 2, that means it is difficult to proceed with the game (not good). The suitability information and the like shown in FIG. 5 are only examples and are not limitative of the present invention. Specifically, the range network delays may further cover a range other than what was given above, such as 0 to 10, 10 to 25, 25 to 50, 50 to 100, 100 to 150, 150 to 200, and 200 or longer. The range of the delays may also be divided into irregular intervals.

And as shown in FIG. 6, if it is intended to offer part of a given game program (called a mini-game hereinafter), each of multiple stages making up a given game, or a battle with a specific character in a given game, these game portions may be stored in relation to mini-game ID's in addition to the above-mentioned game ID's.

An explanation is made here of the specific example in FIG. 6 in which the communication information acquisition unit 501 is assumed to have acquired communication information of 12 (msec in network delays). In this case, based on the acquired communication information 12, the suitability information acquisition unit 502 references the suitability information storage unit 507 to acquire the suitability information about each game or each mini-game. Specifically, as shown in FIG. 8, the communication information 12 in question falls within a range of 10 to 15, so that the suitability information acquisition unit 502 may acquire from the communication information 12 the suitability information 1 (acceptable) for game ID "G1," the suitability information 1 (acceptable) for mini-game ID "ga" under game ID "G1," the suitability information 0 (good) for game ID "G2," and the suitability information 2 (not good) for mini-game ID "gc" under game ID "G3."

The display information generation unit 503 generates display information for displaying the content of each game or mini-game based on each item of the suitability information acquired by the suitability information acquisition unit 502. Specifically, as shown in FIG. 7, the display information generation unit 503 may generate display information displaying the information representing the content of each game or mini-game (e.g., image information related to each game) together with suitability display information (e.g., OK, Not Good, and Bad) corresponding to the suitability information, for example. The display information in question is sent to the corresponding terminal 102 and displayed on the display unit of that terminal 102 as a selection screen. This allows the user to select a desired game or mini-game by referring to the selection images being displayed. The image information representing the content of each game or mini-game and the suitability display information denoting "OK," "Good," etc., are stored in a content information storage unit 508 in relation to each game ID, each mini-game ID, and suitability information.

Also, the display information generation unit 503 may be structured to generate only display information displaying each game or mini-game corresponding to solely the suitability information that is "good," or "good" or "acceptable," for example. At this point, the suitability information such as "OK" or "Good" may be displayed at the same time. In these cases, the games or mini-games that are difficult to play smoothly due to network delays or other factors for example are not displayed on the selection screen, so that the user can select desired games or mini-games more easily than before. It should be noted that the above-described display information is only an example. Alternatively, the display information generation unit 503 may display games and mini-games in the form of so-called EPG (Electric Program Guide) for TV programs, i.e., as multiple programs corresponding to the types and attributes of games and mini-games, for example. In this case, the organization of each program may be varied depending the corresponding suitability information.

Explained next is a typical functional structure of each virtual machine 104. As shown in FIG. 5, each virtual machine 104 may include an execution control unit 504, an execution unit 505, and a communication unit 506, for example. The execution unit 503 executes game programs based on control signals coming from the execution control unit 504 (to be discussed later). Specifically, the execution unit 503 may correspond to a game machine reproduced by an emulator or a simulator, for example. Alternatively, a game machine itself may be actually provided as the execution unit 503. If the user selects a given mini-game, the execution unit 503 executes the game program corresponding to the mini-game in question using execution state information corresponding to that mini-game.

The execution state information in this context is equivalent to the execution state information of game machines reproduced by emulators or simulators (e.g., values in memories and registers as well as program counter values) or to the execution state information of a given game machine if that machine is actually provided. Thus when the execution unit 503 executes the game program corresponding to a given mini-game using the execution state information corresponding to that mini-game, it is possible to configure a mini-game composed of part of a game program designed to be executed by a dedicated machine (e.g., one of multiple stages or a battle with a specific character).

The execution control unit 504 controls the execution unit 505. Specifically, as shown in FIG. 8, the execution control unit 504 may include a game acquisition unit 801, an execution state information acquisition unit 802, an execution information acquisition unit 803, a condition determination unit 804, and a condition information acquisition unit 805, for example.

The game acquisition unit 801 acquires from the game storage unit 509 the game program corresponding to the game or mini-game selected by the user on the above-mentioned selection screen, for example. Specifically, the user's instruction to select a game or a mini-game may include the game ID corresponding to that game or mini-game, for example. The game storage unit 509 stores game programs each in relation to a given game ID. The game acquisition unit 801 acquires the game program related to the game ID.

The execution state information acquisition unit 802 acquires from the execution state information storage unit 510 the execution state information related to the mini-game ID included in a mini-game selection instruction issued by the user, for example. That is, the execution state information storage unit 510 may store each item of execution state information in relation to each mini-game ID, for example.

The execution information acquisition unit 803 acquires game execution information generated by the execution unit 505, such as image information and audio information generated through game execution, as well as execution state information about the execution unit 505. The execution state information in this context is equivalent to the execution state information of game machines reproduced by emulators or simulators (e.g., values in memories and registers as well as program counter values) or to the execution state information about a given game machine if that game machine is actually provided.

The condition information acquisition unit 805 acquires from the condition information storage unit 511 the condition information identified by a condition information ID stored in relation to the acquired execution state information ID. The condition information in this context corresponds to information representing diverse conditions such as ending conditions of each mini-game. Also, the execution state information ID may be included in a mini-game selection instruction issued by the user, for example.

The condition determination unit 804 acquires the game execution information obtained by the execution information acquisition unit 803 as well as the condition information obtained by the condition information acquisition unit 805. The condition determination unit 804 then determines whether or not the game execution information in question (e.g., image information) meets a predetermined condition represented by the above-mentioned condition information. Specifically, the condition determination unit 804 may determine whether or not given condition information is met by comparing image information, character information, audio information, and execution state information preset as the condition information, with the execution information generated by the execution unit 505 (e.g., image information, character information, audio information, and execution state information) by using so-called image recognition, character recognition, and sound recognition. More specifically, if the condition information is an ending condition about the termination of a given mini-game, it may be determined whether or not the ending condition of that mini-game is met by recognizing the display of a goal or the display of a win/loss of a battle game preset as the condition information, for example. If it is determined that the ending condition of the mini-game is met, the execution of the current game program by the execution unit 505 is terminated. Incidentally, the condition information may include a predetermined condition allowing a predetermined process to be carried out if that condition is met while a mini-game is being played.

The communication unit 506 compresses the execution information such as image information (including dynamic image information) and audio information generated by the execution unit 505 executing a game or a mini-game, and sends the compressed image information and other information to the corresponding terminal 102. The terminal 102 in question decompresses the compressed image information and other information and causes the decompressed information to be displayed on the display unit 204 of the terminal. In other words, with this embodiment, the game or mini-game selected by the user operating the operation unit 205 of the terminal 102 is sent in so-called streaming mode to the corresponding terminal 102 and played thereon. Alternatively, the communication unit 506 may be structured to send, in uncompressed form, the image information and other information generated by the execution unit 505. Also, the communication unit 506 acquires various operating instructions input through each terminal 102 by the user and sends the acquired instructions to the execution unit 505. The execution unit 505 executes the game program in accordance with the operating instructions thus given. Specifically, the execution unit 505 may manipulate an operation target based on these operating instructions for example.

The above-described functional structure of the information processing system 110 is only an example and is not limitative of the present invention. For example, in addition to the aforementioned network delays, the communication information acquisition unit 501 may acquire information representing the type of the network connecting a given terminal 102 with the communication unit 506 of the virtual machine 104, information representing the type of that terminal 102, and information representing a controller of the terminal 102. The display information generation unit 503 may then be structured to generate display information based on part or all of these items of information. Specifically in this case, the suitability information may be configured to be stored in relation to part or all of these items of information so that the suitability information may be acquired based on part or all of these information items and that the display information may be generated in accordance with the acquired suitability information, for example. Here, the information representing the network type, the information representing the type of the terminal 102, and the information representing the controller of the terminal 102 may be arranged to be acquired by a network information acquisition unit, a terminal information acquisition unit, and a controller information acquisition unit included in the communication information acquisition unit 501, for example. In this case, the information representing the network type may include information denoting Wifi, 3G, LTE, or Ethernet (registered trademark), for example. The information representing the type of the terminal 102 may include information denoting a TV set, a smartphone, a tablet computer, or a personal computer, for example. The information representing the controller of the terminal 102 may include information denoting a game pad, a TV remote controller, a mouse, a keyboard, or a touch panel, for example.

Explained next using FIG. 9 is a typical flow of the processing performed by the information processing system of this embodiment. Although there will be explained below a case in which suitability information is acquired based on communication information (e.g., network delays) so that the selection screen is displayed in accordance with the acquired suitability information, the case is not limitative of this embodiment. Alternatively, suitability information may be acquired based on the information representing the network type, the information representing the type of the terminal 102, the information representing the controller of the terminal 102, and other information so that the selection screen may be displayed in accordance with the suitability information thus acquired.

The communication information acquisition unit 501 acquires communication information representing the communication states regarding the network connecting a given terminal 102 with the communication unit 506 communicating with that terminal 102 (S101). As mentioned above, the communication information acquisition unit 501 may acquire network delays on the network connected with the terminals 102 for example.

Based on the communication information acquired by the communication information acquisition unit 501, the suitability information acquisition unit 502 references the suitability information storage unit 507 to acquire the suitability information in effect when each game or mini-game is executed on the terminal 102 in question (S102). Specifically, the suitability information in multiple stages regarding each game or mini-game, such as the suitability information 0, 1, or 2 about each game or mini-game shown in FIG. 6 may be acquired.

Based on the suitability information acquired by the suitability information acquisition unit 502, the display information generation unit 503 generates display information for displaying the content of each game or mini-game in a manner reflecting the corresponding suitability information. At the same time, the display information generation unit 503 sends the generated display information to the corresponding terminal 102 (S103).

The terminal 102 may acquire the display information in question and display the acquired information as a game selection screen on the display unit of the terminal 102, for example. The user selects a mini-game or a game by referencing the displayed game selection screen (S104). For example, if the display information is displayed together with suitability information (e.g., suitability display such as "Good"), the user may select a game or a mini-game whose suitability information is "Good." This allows the user to play the selected game or mini-game agreeably on the currently used terminal 102.

Given the user's game selecting instruction, the execution control unit 504 acquires the game program corresponding to the selected game or mini-game as well as the corresponding execution state information (S105). Specifically, if the user selects a game, it means the game selecting instruction includes a game ID, so that the execution control unit 504 acquires the game program identified by that game ID from the game storage unit 509 and causes the execution unit 505 to execute the game program in question. On the other hand, if the user selects a mini-game, it means the game selecting instruction includes a game ID and a mini-game ID. The execution control unit 504 then acquires the game program identified by that game ID, the execution state information identified by that mini-game ID, and the condition information related to the mini-game ID, from the game storage unit 509, execution state information storage unit 510, and condition information storage unit 511, respectively. Thereafter, the execution control unit 504 executes the game program using the acquired execution state information.

When the game comes to an end, the game is terminated (S106). Specifically, if the game has been selected from the selection screen, the execution of the game program is terminated when the user issues a terminating instruction. On the other hand, if a mini-game has been selected, the execution of the corresponding game program is terminated when the execution information accompanying the execution of that game program meets the above-mentioned condition information. The processing is then terminated.

With this embodiment, each game can be displayed in accordance with the impact on that game of the states of the network (e.g., network delays) connecting the terminal 102 with the virtual machine 104 executing each game, i.e., in keeping with the suitability of executing each game. Specifically, the selection screen for selecting each game or mini-game may be displayed together with the impact of the network communication states on the execution of a given application, i.e., the suitability information representing how suitable the execution of that application is, as well as with indications of the suitability that is higher than a predetermined degree, for example. By referencing the above selection screen, the user can select a desired game or mini-game suitable for execution. This makes it possible, for example where the impact of the delays over the network connected with the terminal 102 is significant, to avoid beforehand the selection of games or mini-games vulnerable to the network delays. It is also possible to notify the user beforehand of the impact of network delays on each game and mini-game. In particular, more accurate suitability information can be obtained for the mini-games that are played by the user in limited scenes. When no display is made of the mini-games or games of which the execution is highly vulnerable to the impact of network delays and other factors, i.e., when solely the mini-games and games relatively immune to the impact of network delays and other factors are displayed on the selection screen, the lineup of games and mini-games to be offered to the user can be suitably determined. Alternatively, the lineup may be determined based on the network type, terminal type, and controller type as well.

The functional structure and the process flow of the above-described information processing system 110 are only examples and are not limitative of the present invention. For example, part or all of the structure of the management server 103 may be incorporated in the virtual machines 104. Conversely, part or all of the structure of the virtual machines 104 may be incorporated in the management server 103. As another example, part or all of the structure of the DB 105 may be incorporated in the management server 103 and in the virtual machines 104. Whereas the foregoing paragraphs have discussed cases in which the information processing system 110 is configured using the so-called cloud computing base, this is not limitative of the present invention. Alternatively, the information processing system 110 may be configured as an ordinary server-client system. Upon selection of a game or a mini-game about which the suitability information acquisition unit 501 has acquired the "not good" suitability information for example, the selected game or mini-game may be executed by a server or a virtual machine in a better communication environment (e.g., with less network delays), and the result of the execution may be sent to the terminal 102 used by the user. This arrangement allows the user to play the desired game in a superior network environment. Incidentally, the sending means described in the appended claims corresponds to the communication unit 506, for example. Also, the network information acquisition means, terminal information acquisition means, and control information acquisition means described in the appended claims are included in the communication information acquisition unit 501, for example.

### [Variation]

One variation of the present invention is explained below. With this variation, multiple virtual servers 104 are assumed to exist in a geographically dispersed manner (e.g., in various countries). Specifically, there may be assumed a case where the edge servers owned by a CDN (Contents Delivery Network) vendor are used as an environment in which game programs are executed in cooperation with that CDN vendor. In this case, the communication information acquisition unit 501 acquires the communication information representing each of the communication states between the communication unit 506 of each virtual server 104 and one terminal 102. Based on the acquired items of communication information, the suitability information acquisition unit 502 acquires the suitability information representing the impact of each of the communication states on the execution of each game program. On the basis of the acquired items of suitability information, the virtual server 104 to be allocated to the terminal 102 is determined. Specifically, which of the virtual servers 104 is to be used may be determined beforehand in accordance with the states of the network (communication information) connecting each virtual server 104 with the terminal 102 and in keeping with the type of the game program, for example. More specifically, the game programs of which the execution is highly vulnerable to network delays may be executed by a virtual server 104 located closer (i.e., with reduced network delays) to the terminal 102, whereas the game programs whose execution is relatively immune to network delays may be performed by servers with low running costs (i.e., by servers or virtual servers owned by the distributor of the game programs in question), for example.

Then as with the first embodiment, the communication information acquisition unit 501 acquires the communication information between the terminal 102 and the communication unit 506 of the virtual server 104 determined as described above. The display information generation unit 503 generates the display information based on the communication information and on the items of suitability information acquired by the suitability information acquisition unit 502. In this case, the communication information and suitability information may be arranged to be what was acquired earlier upon selection of the virtual server 104.

In this manner, it is possible to select the virtual server 104 having a more optimal environment for game program execution and to display the menu information indicating the suitability of executing a given game program based on that selection, for example. In this case, a given virtual server 104 may be selected depending on its utilization status of the virtual server 104, and the menu information may be displayed in keeping with the states of the network between the selected virtual server 104 and the terminal 102. Specifically, where numerous users are utilizing a given virtual server 104, i.e., where numerous terminals 102 are connected with that virtual server 104, another virtual server 104 may be selected, and the menu information may be displayed in accordance with the state of the network relative to the selected virtual server 104.

The above-described embodiment and variation of the present invention are not limitative thereof. They can be replaced with structures that are substantially the same as those described above or with structures that will provide the same effects or attain the same object as discussed above. Specifically, part or all of the structure of the management server 103 may be incorporated in the virtual machines 104, for example. Conversely, part or all of the structure of the virtual machines 104 may be incorporated in the management server 103. As another example, part or all of the structure of the DB 105 may be provided in the management server 103 and in the virtual machines 104. Furthermore, part or all of the structure of the virtual machines 104 and management server 103 may be provided in the terminals 102. Although the foregoing paragraphs have discussed cases in which the information processing system 110 is configured using the so-called cloud computing base 100, this is not limitative of the present invention. Alternatively, the information processing system 110 may be configured as an ordinary server-client system. Although cases in which game programs are executed have primarily been explained in the foregoing, this is not limitative of the present invention. Alternatively, the invention may be applied to cases in which other application programs are executed. Incidentally, the reception means and display means described in the appended claims correspond to the communication unit 202, control unit 201, and display unit 204 of the terminal 102, for example.

## Claims

1. An information processing system (110) comprising:
one or more terminals (102); and
a cloud computing system (100) connected to the one or more terminals via a network (101), the cloud computing system comprising:
execution means (505) for executing at least one application from among multiple applications;
sending means (506) for sending to a terminal the result of the execution by said execution means of said at least one application;
communication information acquisition means (501) for acquiring communication information representing the communication states between said sending means and said terminal, wherein the communication information includes network delay information;
suitability information storage means (507) for storing suitability information representing the suitability of executing each of said applications in relation to application identification information identifying each of said applications and to a range of network delay values of said communication information;
suitability information acquisition means (502) for acquiring the suitability information about each of said applications based on the acquired communication information; and
display information generation means (503) for generating display information for displaying the content of said multiple applications in accordance with the acquired suitability information, the display information being displayed by said terminal,
wherein the display information generation means is configured, when generating the display information, to omit the content of applications that are not suitable for use under the conditions identified by the suitability information and the network delay information.

2. An information processing system according to claim 1, wherein said display information generation means generates the display information for displaying said part or all of the content of said applications together with said suitability information corresponding thereto.

3. An information processing system according to claim 1, wherein said display information generation means generates the display information for displaying said part or all of the content of said applications in the order reflecting said suitability information corresponding thereto.

4. An information processing system according to claim 1, wherein the cloud computing system further comprises
network information acquisition means (501) for acquiring network information representing the type of a network connecting said sending means with said terminal,
wherein said display information generation means generates the display information for displaying part or all of the content of said multiple applications in accordance with said network information.

5. An information processing system according to claim 1, wherein the cloud computing system further comprises
terminal information acquisition means (501) for acquiring terminal type information representing the type of said terminal,
wherein said display information generation means generates the display information for displaying part or all of the content of said multiple applications in accordance with said terminal information.

6. An information processing system according to claim 1, wherein the cloud computing system further comprises
controller information acquisition means (501) for acquiring controller information representing the type of a controller of said terminal,
wherein said display information generation means generates the display information for displaying part or all of the content of said multiple applications in accordance with said controller information.

7. An information processing system according to claim 1, wherein said suitability information storage means stores execution state information in relation to the execution of each of said applications.

8. An information processing system according to claim 7, wherein said execution means executes said at least one application using said execution state information corresponding thereto.

9. An information processing system according to claim 1, wherein, if said suitability information is below a predetermined condition, another execution means is used in place of said execution means to execute said at least one application and another sending means is used in place of said sending means to send the result of the execution of said at least one application.

10. An information processing method utilizing a cloud computing system (100) connected to one or more terminals (102) via a network (101), the method comprising:
acquiring by the cloud computing system communication information representing the communication states between sending means associated with the cloud computing system and a corresponding terminal, wherein the communication information includes network delay information;
storing by the cloud computing system suitability information representing the suitability of executing each of said applications in relation to application identification information identifying each of said applications and to a range of network delay values of said communication information;
acquiring by the cloud computing system the suitability information about each of said applications based on the acquired communication information;
generating by the cloud computing system display information for displaying the content of said multiple applications in accordance with the acquired suitability information; and
displaying by the corresponding terminal the display information
wherein the step of generating the display information comprises omitting the content of applications that are not suitable for use under the conditions identified by the suitability information and the network delay information.

11. Computer program product comprising instructions which, when the program is executed by a cloud computing system, cause the cloud computing system to carry out the method of claim 10.

12. A computer-readable recording medium having stored thereon the computer program product of claim 11.

13. An information processing system according to claim 1, wherein the cloud computing system further comprises
multiple execution means for executing at least one application each, and
multiple sending means,
wherein said communication information acquisition means acquires the communication information representing each of the communication states between said multiple sending means and said terminal,
wherein said suitability information acquisition means acquires the suitability information about each of said applications based on the acquired communication information, and
wherein said execution means and said sending means are one execution means and one sending means selected respectively from among said multiple execution means and said multiple sending means in accordance with said communication information and said suitability information.

## Patentansprüche

1. Informationsverarbeitungssystem (110), umfassend:
ein oder mehrere Endgeräte (102); und
ein Cloud-Rechensystem (100), das mit dem einen oder den mehreren Endgeräten über ein Netzwerk (101) verbunden ist, wobei das Cloud-Rechensystem umfasst:
Ausführungsmittel (505) zum Ausführen mindestens einer Anwendung aus mehreren Anwendungen;
Sendemittel (506) zum Senden des Ergebnisses der Ausführung der mindestens einen Anwendung durch die Ausführungsmittel an ein Endgerät;
Kommunikationsinformationserfassungsmittel (501) zum Erfassen von Kommunikationsinformationen, die Kommunikationszustände zwischen dem Sendemittel und dem Endgerät darstellen, wobei die Kommunikationsinformationen Netzwerkverzögerungsinformationen einschließen;
Eignungsinformationenspeichermittel (507) zum Speichern von Eignungsinformationen, die die Eignung der Ausführung jeder der Anwendungen in Bezug auf Anwendungsidentifikationsinformationen, die jede der Anwendungen identifizieren, und auf einen Bereich von Netzwerkverzögerungswerten der Kommunikationsinformationen darstellen;
Eignungsinformationserfassungsmittel (502) zum Erfassen der Eignungsinformationen über jede der Anwendungen basierend auf den erfassten Kommunikationsinformationen; und
Anzeigeinformationserzeugungsmittel (503) zum Erzeugen von Anzeigeinformationen zum Anzeigen des Inhalts der mehreren Anwendungen gemäß den erfassten Eignungsinformationen, wobei die Anzeigeinformationen durch das Endgerät angezeigt werden,
wobei das Anzeigeinformationserzeugungsmittel konfiguriert ist, um beim Erzeugen der Anzeigeinformationen den Inhalt von Anwendungen wegzulassen, die nicht zur Verwendung unter den durch die Eignungsinformationen und die Netzwerkverzögerungsinformationen identifizierten Bedingungen geeignet sind.

2. Informationsverarbeitungssystem nach Anspruch 1, wobei das Anzeigeinformationserzeugungsmittel die Anzeigeinformationen zum Anzeigen des Teils oder des gesamten Inhalts der Anwendungen zusammen mit den ihnen entsprechenden Eignungsinformationen erzeugt.

3. Informationsverarbeitungssystem nach Anspruch 1, wobei das Anzeigeinformationserzeugungsmittel die Anzeigeinformationen zum Anzeigen des Teils oder des gesamten Inhalts der Anwendungen in der Reihenfolge erzeugt, die die entsprechenden Eignungsinformationen widerspiegelt.

4. Informationsverarbeitungssystem nach Anspruch 1, wobei das Cloud-Rechensystem ferner umfasst
Netzwerkinformationserfassungsmittel (501) zum Erfassen von Netzwerkinformationen, die den Typ eines Netzwerks darstellen, das das Sendemittel mit dem Endgerät verbindet,
wobei das Anzeigeinformationserzeugungsmittel die Anzeigeinformationen zum Anzeigen eines Teils oder des gesamten Inhalts der mehreren Anwendungen gemäß den Netzwerkinformationen erzeugt.

5. Informationsverarbeitungssystem nach Anspruch 1, wobei das Cloud-Rechensystem ferner umfasst
ein Endgeräteinformationserfassungsmittel (501) zum Erfassen von Endgerätetypinformationen, die den Typ des Endgeräts darstellen,
wobei das Anzeigeinformationserzeugungsmittel die Anzeigeinformationen zum Anzeigen eines Teils oder des gesamten Inhalts der mehreren Anwendungen gemäß den Endgeräteinformationen erzeugt.

6. Informationsverarbeitungssystem nach Anspruch 1, wobei das Cloud-Rechensystem ferner umfasst
ein Steuerungsinformationserfassungsmittel (501) zum Erfassen von Steuerungsinformationen, die den Typ einer Steuerung des Endgeräts darstellen,
wobei das Anzeigeinformationserzeugungsmittel die Anzeigeinformationen zum Anzeigen eines Teils oder des gesamten Inhalts der mehreren Anwendungen gemäß den Steuerungsinformationen erzeugt.

7. Informationsverarbeitungssystem nach Anspruch 1, wobei das Eignungsinformationsspeichermittel Ausführungszustandsinformationen in Bezug auf die Ausführung jeder der Anwendungen speichert.

8. Informationsverarbeitungssystem nach Anspruch 7, wobei das Ausführungsmittel die mindestens eine Anwendung unter Verwendung der ihr entsprechenden Ausführungszustandsinformationen ausführt.

9. Informationsverarbeitungssystem nach Anspruch 1, wobei, wenn die Eignungsinformationen unter einer vorbestimmten Bedingung liegen, ein anderes Ausführungsmittel anstelle des Ausführungsmittels verwendet wird, um die mindestens eine Anwendung auszuführen, und ein anderes Sendemittel anstelle des Sendemittels verwendet wird, um das Ergebnis der Ausführung der mindestens einen Anwendung zu senden.

10. Informationsverarbeitungsverfahren, das ein Cloud-Rechensystem (100) verwendet, das mit einem oder mehreren Endgeräten (102) über ein Netzwerk (101) verbunden ist, wobei das Verfahren umfasst:
Erfassen von Kommunikationsinformationen durch das Cloud-Rechensystem, die die Kommunikationszustände zwischen einem mit dem Cloud-Rechensystem verbundenen Sendemittel und einem entsprechenden Endgerät darstellen, wobei die Kommunikationsinformationen Netzwerkverzögerungsinformationen einschließen;
Speichern von Eignungsinformationen durch das Cloud-Rechensystem, die die Eignung der Ausführung jeder der Anwendungen in Bezug auf Anwendungsidentifikationsinformationen, die jede der Anwendungen identifizieren, und auf einen Bereich von Netzwerkverzögerungswerten der Kommunikationsinformationen darstellen;
Erfassen der Eignungsinformationen durch das Cloud-Rechensystem über jede der Anwendungen basierend auf den erfassten Kommunikationsinformationen;
Erzeugen von Anzeigeinformationen durch das Cloud-Rechensystem zum Anzeigen des Inhalts der mehreren Anwendungen gemäß den erfassten Eignungsinformationen; und
Anzeigen der Anzeigeinformationen durch das entsprechende Endgerät
wobei der Schritt des Erzeugens der Anzeigeinformationen ein Weglassen des Inhalts von Anwendungen umfasst, die nicht zur Verwendung unter den durch die Eignungsinformationen und die Netzwerkverzögerungsinformationen identifizierten Bedingungen geeignet sind.

11. Computerprogrammprodukt, das Anweisungen umfasst, die, wenn das Programm von einem Cloud-Rechensystem ausgeführt wird, das Cloud-Rechensystem veranlassen, das Verfahren nach Anspruch 10 auszuführen.

12. Computerlesbares Aufzeichnungsmedium, auf dem das Computerprogrammprodukt nach Anspruch 11 gespeichert ist.

13. Informationsverarbeitungssystem nach Anspruch 1, wobei das Cloud-Rechensystem ferner umfasst
mehrere Ausführungsmittel zum Ausführen von jeweils mindestens einer Anwendung, und
mehrere Sendemittel,
wobei das Kommunikationsinformationserfassungsmittel die Kommunikationsinformationen erfasst, die jeden der Kommunikationszustände zwischen den mehreren Sendemitteln und dem Endgerät darstellen,
wobei die Eignungsinformationserfassungsmittel die Eignungsinformationen über jede der Anwendungen basierend auf den erfassten Kommunikationsinformationen erfasst, und
wobei das Ausführungsmittel und das Sendemittel ein Ausführungsmittel und ein Sendemittel sind, die jeweils aus den mehreren Ausführungsmitteln und den mehreren Sendemitteln gemäß den Kommunikationsinformationen und den Eignungsinformationen ausgewählt sind.

## Revendications

1. Système de traitement d'informations (110) comprenant :
un ou plusieurs terminaux (102) ; et
un système informatique en nuage (100) connecté au ou aux terminaux par l'intermédiaire d'un réseau (101), le système informatique en nuage comprenant :
un moyen d'exécution (505) pour exécuter au moins une application parmi plusieurs applications ;
un moyen d'envoi (506) pour envoyer à un terminal le résultat de l'exécution par ledit moyen d'exécution de ladite au moins une application ;
un moyen d'acquisition d'informations de communication (501) pour acquérir des informations de communication représentant les états de communication entre ledit moyen d'envoi et ledit terminal, dans lequel les informations de communication comportent des informations de retard de réseau ;
un moyen de stockage d'informations d'adéquation (507) pour stocker des informations d'adéquation représentant l'adéquation d'exécution de chacune desdites applications par rapport à des informations d'identification d'application identifiant chacune desdites applications et à une plage de valeurs de retard de réseau desdites informations de communication ;
un moyen d'acquisition d'informations d'adéquation (502) pour acquérir les informations d'adéquation concernant chacune desdites applications sur la base des informations de communication acquises ; et
un moyen de génération d'informations d'affichage (503) pour générer des informations d'affichage pour afficher le contenu desdites multiples applications conformément aux informations d'adéquation acquises, les informations d'affichage étant affichées par ledit terminal,
dans lequel le moyen de génération d'informations d'affichage est configuré, lors de la génération des informations d'affichage, pour omettre le contenu d'applications qui ne sont pas adéquates pour une utilisation dans les conditions identifiées par les informations d'adéquation et les informations de retard de réseau.

2. Système de traitement d'informations selon la revendication 1, dans lequel ledit moyen de génération d'informations d'affichage génère les informations d'affichage pour afficher ladite partie ou la totalité du contenu desdites applications conjointement avec lesdites informations d'adéquation correspondant à celles-ci.

3. Système de traitement d'informations selon la revendication 1, dans lequel ledit moyen de génération d'informations d'affichage génère les informations d'affichage pour afficher ladite partie ou la totalité du contenu desdites applications dans l'ordre reflétant lesdites informations d'adéquation correspondant à celles-ci.

4. Système de traitement d'informations selon la revendication 1, dans lequel le système informatique en nuage comprend en outre
un moyen d'acquisition d'informations de réseau (501) pour acquérir des informations de réseau représentant le type d'un réseau connectant ledit moyen d'envoi audit terminal,
dans lequel ledit moyen de génération d'informations d'affichage génère les informations d'affichage pour afficher une partie ou la totalité du contenu desdites multiples applications conformément auxdites informations de réseau.

5. Système de traitement d'informations selon la revendication 1, dans lequel le système informatique en nuage comprend en outre
un moyen d'acquisition d'informations de terminal (501) pour acquérir des informations de type de terminal représentant le type dudit terminal,
dans lequel ledit moyen de génération d'informations d'affichage génère les informations d'affichage pour afficher une partie ou la totalité du contenu desdites multiples applications conformément auxdites informations de terminal.

6. Système de traitement d'informations selon la revendication 1, dans lequel le système informatique en nuage comprend en outre
un moyen d'acquisition d'informations de dispositif de commande (501) pour acquérir des informations de dispositif de commande représentant le type d'un dispositif de commande dudit terminal,
dans lequel ledit moyen de génération d'informations d'affichage génère les informations d'affichage pour afficher une partie ou la totalité du contenu desdites multiples applications conformément auxdites informations de dispositif de commande.

7. Système de traitement d'informations selon la revendication 1, dans lequel ledit moyen de stockage d'informations d'adéquation stocke des informations d'état d'exécution par rapport à l'exécution de chacune desdites applications.

8. Système de traitement d'informations selon la revendication 7, dans lequel ledit moyen d'exécution exécute ladite au moins une application à l'aide desdites informations d'état d'exécution correspondant à celle-ci.

9. Système de traitement d'informations selon la revendication 1, dans lequel, si lesdites informations d'adéquation sont inférieures à une condition prédéterminée, un autre moyen d'exécution est utilisé à la place dudit moyen d'exécution pour exécuter ladite au moins une application et un autre moyen d'envoi est utilisé à la place dudit moyen d'envoi pour envoyer le résultat de l'exécution de ladite au moins une application.

10. Procédé de traitement d'informations utilisant un système informatique en nuage (100) connecté à un ou plusieurs terminaux (102) par l'intermédiaire d'un réseau (101), le procédé comprenant :
l'acquisition par les informations de communication de système informatique en nuage représentant les états de communication entre un moyen d'envoi associé au système informatique en nuage et un terminal correspondant, dans lequel les informations de communication comportent des informations de retard de réseau ;
le stockage, par le système informatique en nuage, d'informations d'adéquation représentant l'adéquation d'exécution de chacune desdites applications par rapport à des informations d'identification d'application identifiant chacune desdites applications et à une plage de valeurs de retard de réseau desdites informations de communication ;
l'acquisition par le système informatique en nuage des informations d'adéquation concernant chacune desdites applications sur la base des informations de communication acquises ;
la génération, par le système informatique en nuage, des informations d'affichage pour afficher le contenu desdites multiples applications conformément aux informations d'adéquation acquises ; et
l'affichage par le terminal correspondant des informations d'affichage
dans lequel l'étape de génération des informations d'affichage comprend l'omission du contenu d'applications qui ne sont pas adéquates pour une utilisation dans les conditions identifiées par les informations d'adéquation et les informations de retard de réseau.

11. Produit-programme informatique comprenant des instructions qui, lorsque le programme est exécuté par un système informatique en nuage, amènent le système informatique en nuage à effectuer le procédé selon la revendication 10.

12. Support d'enregistrement lisible par ordinateur sur lequel est stocké le produit-programme informatique selon la revendication 11.

13. Système de traitement d'informations selon la revendication 1, dans lequel le système informatique en nuage comprend en outre
de multiples moyens d'exécution pour exécuter au moins une application, et
de multiples moyens d'envoi,
dans lequel ledit moyen d'acquisition d'informations de communication acquiert les informations de communication représentant chacun des états de communication entre lesdits multiples moyens d'envoi et ledit terminal,
dans lequel ledit moyen d'acquisition d'informations d'adéquation acquiert les informations d'adéquation concernant chacune desdites applications sur la base des informations de communication acquises, et
dans lequel ledit moyen d'exécution et ledit moyen d'envoi sont un moyen d'exécution et un moyen d'envoi sélectionnés respectivement parmi lesdits multiples moyens d'exécution et lesdits multiples moyens d'envoi conformément auxdites informations de communication et auxdites informations d'adéquation.
